# EUROPEAN PATENT SPECIFICATION

(11) **EP 3 267 053 B1**
(45) Date of publication and mention of the grant of the patent: **05.12.2018**
(21) Application number: 17175458.3
(22) Date of filing: 12.06.2017
(51) Int. Cl.: F16B 45/02

(54) **CARABINERS**
KARABINER
MOUSQUETONS

(30) Priority: 05.07.2016 GB 201611706
(43) Date of publication of application: 10.01.2018
(73) Proprietor: DMM International Ltd, Llanberis Gwynedd LL55 4EL (GB)
(72) Inventor: Swanson-Lowe, Dougie, Llanberis, LL55 4EL (GB)
(74) Representative: Hamilton, Alistair

(56) References cited:
- FR-A1- 2 803 343
- JP-U- S5 733 342
- JP-U- S6 417 020
- JP-U- S51 163 357

## Description

The present invention relates to screwgate carabiners.

A screwgate carabiner is a type of carabiner that allows an openable grate to be secured in a closed position by a screw-threaded thimble. Such carabiners are well-known (cf. FR 2 803 343 A1) and their general configuration will be described below.

The thimble has an internal thread that is in operative engagement with an external thread of a component of the gate on which the thimble is carried. In a conventional screwgate carabiner, the threads are formed such that at a closed position, the thimble can be tightened to cause the crest of one thread to bottoms-out in the root of the other, so as to resist mutual rotation of the threaded components by friction. A problem can arise with screwgate carabiners where, if the gate is tightened firmly, it can jam, making loosening difficult for a user. It has, unexpectedly, been found that the problem of jamming is particularly likely to occur when one or both of the thimble and the component on which it is carried is anodised, and most especially when one or both of these components has a layer of anodisation that is thicker than is typical, as is the case where the colour of the anodisation is black.

An aim of this invention is to provide a screwgate carabiner which is less likely to jam in the closed position than conventional screwgate carabiners.

To this end, from a first aspect, the invention provides a gate for a carabiner comprising a gate bar and a locking thimble, the gate bar and the locking thimble being interconnected by interengaging screw threads whereby their mutual rotation about an axis causes the thimble to move axially along the gate bar between an open position and a closed position, wherein each of the gate bar and the locking thimble carries abutments that extend circumferentially about the axis, which abutments come into contact with one another when the thimble is in the closed position.

In embodiments of the invention, when a user tightens the thimble in the closed position, it is frictional contact between the abutments of the thimble and the gate bar that holds the thimble in place: the threads themselves are not locked together. It has been found that this arrangement can provide reliable locking, but is less prone to jamming than conventional screwgate carabiners.

Each abutment is preferably disposed in a plane that extends normally to the axis: that is to say, the abutments are not helical. In a typical embodiment, one of or both of the abutments extends in a continuous loop about the axis.

In typical arrangements, the abutment of the thimble projects radially inwardly into an axial passage that extends through the thimble. The abutment of the gate bar may be a rib that projects radially (i.e., at least, a component of the projection direction is radial) from an outer surface of the gate bar.

One or both of the gate bar and the thimble may be anodised. This invention may find particular advantage where the anodisation layer has a thickness of 8-20µm, and in particular where the anodisation layer is in excess of 15µm. In general, the thicker the anodisation layer is, the more likely jamming is to occur, so the more benefit is likely to be obtained from the invention. In such embodiments, the colour of anodisation of one or both components may be black. It will, however, be noted that embodiments of this invention can be used where there is no problem with jamming. Since it is not significantly harder or more expensive to manufacture than a conventional gate, this means that a gate embodying the invention can be considered to be a universal component of wider application than conventional carabiner gates.

From a second aspect, this invention provides a carabiner a body and a gate according to any preceding claim pivotally connected to the body.

The abutments are typically disposed between the screw threads and the connection with the body.

An embodiment of the invention will now be described in detail, by way of example, and with reference to the accompanying drawings, in which:
Figure 1 shows a screwgate carabiner being an embodiment of the invention;
Figures 2, 3 and 4 are perspective, end and side views of a gate being a sub-assembly of the carabiner of Figure 1;
Figure 5 is a section A-A of Figure 3; and

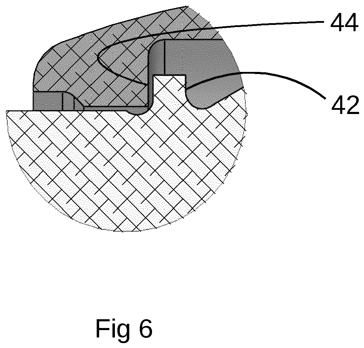

Figure 6 is an enlargement of a detail of region C in Figure 5.

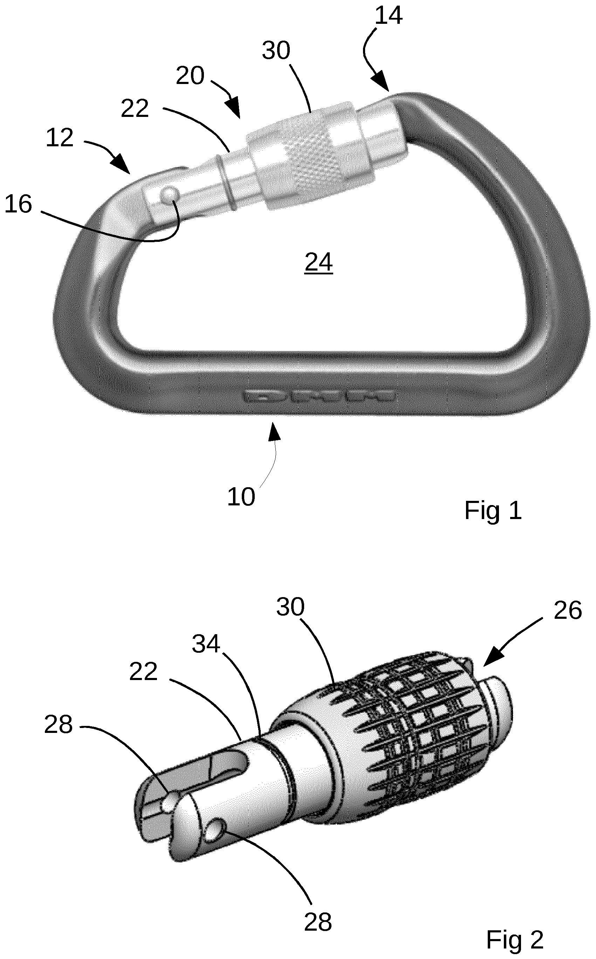

The main components of a screwgate carabiner will be described with reference to Figure 1. The carabiner comprises a body 10 which can take a variety of forms, but which is invariably generally C-shaped within a median plane. The body has a pivot end portion 12 and a free end portion 14 that are spaced apart and extend generally towards one another.

A gate 20 is carried on the body. The gate 20 comprises a gate bar 22 that has one end portion connected to the pivot end 12 of the body 10, such that the gate bar 22 can pivot with respect to the body 10, within the median plane, between a closed position (as shown in Figure 1) and an open position. In this embodiment, the gate bar 22 is connected to the body 10 by a pivot pin 16 that passes through holes 28 in the gate bar 22. In the closed position, the gate bar 22 makes contact with the free end 14 of the body 10, whereby the body 10 and the gate bar 22 form a continuous loop, a flattened end portion of the body 10 entering into a slot 26 formed in the gate bar 22. An enclosed space 24 is therefore defined within the carabiner when the gate 20 is in the closed position. In the open position, the gate bar 22 is pivotally displaced such that there is a space between the free end 14 of the body 10 and the gate, such that the body 10 and the gate 20 are discontinuous, providing an opening into the space within the carabiner.

The gate 20 further comprises a tubular locking thimble 30 carried on and surrounding the gate bar 22. When the gate bar 22 is in the closed position, the thimble 30 can be caused to advance axially along the gate bar 22 in a direction away from the pivot end 12 of the body 10, such that an end portion of the thimble 30 surrounds part of the slot 26 and the free end 14 of the body 10 therein. With the thimble 30 this position, the gate 20 cannot be opened because the thimble 30 prevents the free end 14 of the body 10 from leaving the slot 26.

Each of the body 10 the gate bar 22 and the thimble 30 are formed as one-piece anodised components of a lightweight metal alloy. In this example, the anodising coating of each component is black in colour and approximately 15-20µm thick.

Although there are several arrangements known through which control of the axial position of the thimble 30 on the gate bar 22, the characteristic of a screwgate carabiner is that this is achieved by providing an internal thread on the thimble 30 and an external thread on the gate bar 22 in mutual engagement, as shown at 40.

Rotation of the thimble 30 on the gate bar 22 in a first direction causes the thimble 30 to move towards the pivot pin 16 until it clears the slot 26 sufficiently to allow the free end 14 of the body to pass out of the slot 26 as the gate 20 is opened. Movement of the thimble 30 in this direction is limited by a circlip 34 retained in a peripheral groove 36 on the gate bar 22.

Rotation of the thimble 30 on the gate bar 22 in a second, opposite direction causes the thimble to move away from the pivot pin 16 to a locking position. If this is done with the gate 20 in the closed position, the free end 14 of the body becomes trapped in the slot 26 thus preventing the gate from opening.

The thimble 30 and gate bar 22 must be configured such that when it is in the locking position it is retained there sufficiently firmly to prevent its accidental or spontaneous movement away from that position, but not so firmly as to prevent intentional movement by a user. To this end, a projecting circumferential rib 42 is provided on the gate bar 22 to constitute an abutment between the thread 40 and the pivot pin 16. A cooperating part 44 of the thimble 30 has a cylindrical section that constitutes an abutment, and that closely surrounds a cylindrical portion 46 of the gate bar 22 that extends between the thread 40 and the pivot. The radius of the abutment 44 being such that it is of insufficient size to pass axially across the rib 42. When the thimble 30 reaches the locking position, the abutment 44 makes contact with the rib 42 to prevent further rotation. The thimble 30 can then be tightened against the rib 42 such that mutual friction between the rib 42 and the abutment 44 resists movement of the thimble 30 away from the locking position.

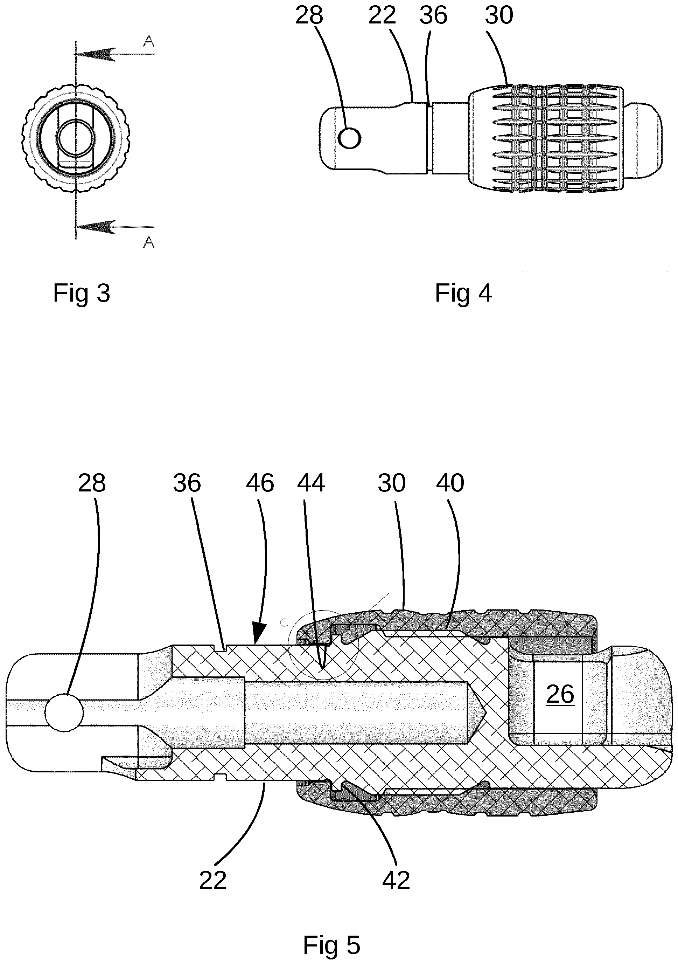

It will be seen from Figure 5 that the dimeter of the portion 46 of the gate bar 22 between the abutment 44 and the pivot is such that it may pass closely through the abutment 44 of the thimble 30. This means that the thimble 30 can be installed onto the gate bar 22 by sliding it onto the gate bar 22 from the pivot and, and then rotating the thimble 30 to case the threads 40 to interengage. The thimble 30 is then advanced along the locking bar 22 until it clears the groove 36, whereupon it can be secured by application of a circlip 34. This completes the assembly of the gate.

A carabiner can then be completed by inserting a return spring assembly into the gate bar 22, and then connecting to gate 20 to the body 10 by inserting the pin 16 through the holes 28 in the gate bar and a corresponding hole in the pivot end of the body 10.

## Claims

1. A gate for a carabiner comprising a gate bar (22) and a locking thimble (30), the gate bar (22) and the locking thimble (30) being interconnected by interengaging screw threads (40) whereby their mutual rotation about an axis causes the thimble (30) to move axially along the gate bar between an open position and a closed position, **characterised in that** each of the gate bar (22) and the locking thimble (30) carries abutments (42, 44) that extend circumferentially about the axis, which abutments (42, 44) come into contact with one another when the thimble (30) is in the closed position.

2. A gate according to claim 1 in which each abutment (42, 44) is disposed in a plane that extends normally to the axis.

3. A gate according to claim 1 or claim 2 in which one of or both of the abutments (42, 44) extends in a continuous loop about the axis.

4. A gate according to any preceding claim in which the abutment (44) of the thimble (30) projects radially inwardly into an axial passage that extends through the thimble.

5. A gate according to any preceding claim in which the abutment (42) of the gate bar (22) is a rib that projects radially from an outer surface of the gate bar.

6. A gate according to any preceding claim in which one or both of the gate bar (22) and the thimble (30) are anodised.

7. A gate according to claim 6 in which the anodisation is layer having a thickness in the range of 8-20µm.

8. A gate according to claim 6 in which the anodisation is layer having a thickness in excess of 15 µm.

9. A gate according to any one of claims 6 to 8 in which the colour of anodisation of one or both of the gate bar (22) and the thimble (30) is black.

10. A carabiner comprising a body (10) and a gate (20) according to any preceding claim pivotally connected to the body.

11. A carabiner according to claim 10 in which the abutments are disposed between the screw threads and the connection with the body.

## Patentansprüche

1. Verschluss für einen Karabiner, umfassend eine Verschlussstrebe (22) und eine Verriegelungskausche (30), wobei die Verschlussstrebe (22) und die Verriegelungskausche (30) miteinander verbunden sind, indem Schraubengewinde (40) miteinander in Eingriff genommen werden, wodurch ihre gemeinsame Drehung um eine Achse bewirkt, dass sich die Kausche (30) axial entlang der Verschlussstrebe zwischen einer offenen Position und einer geschlossenen Position bewegt, **dadurch gekennzeichnet, dass** jede von der Verschlussstrebe (22) und der Verriegelungskausche (30) Widerlager (42, 44) trägt, die sich umlaufend um die Achse erstrecken, wobei die Widerlager (42, 44) miteinander in Kontakt kommen, wenn sich die Kausche (30) in der geschlossenen Position befindet.

2. Verschluss nach Anspruch 1, wobei jedes Widerlager (42, 44) in einer Ebene angeordnet ist, die sich senkrecht zu der Achse erstreckt.

3. Verschluss nach Anspruch 1 oder Anspruch 2, wobei sich eines oder beide der Widerlager (42, 44) in einer durchgehenden Schlaufe um die Achse erstrecken.

4. Verschluss nach einem vorhergehenden Anspruch, wobei das Widerlager (44) der Kausche (30) radial einwärts in einen axialen Durchlass ragt, der sich durch die Kausche erstreckt.

5. Verschluss nach einem vorhergehenden Anspruch, wobei das Widerlager (42) der Verschlussstrebe (22) eine Rippe ist, die radial von einer Außenfläche der Verschlussstrebe ragt.

6. Verschluss nach einem vorhergehenden Anspruch, wobei eine oder beide von der Verschlussstrebe (22) und der Kausche (30) anodisiert sind.

7. Verschluss nach Anspruch 6, wobei die Anodisation eine Schicht ist, die eine Dicke in der Spanne von 8-20 µm aufweist.

8. Verschluss nach Anspruch 6, wobei die Anodisation eine Schicht ist, die eine Dicke von mehr als 15 µm aufweist.

9. Verschluss nach einem der Ansprüche 6 bis 8, wobei die Farbe der Anodisation von einer oder beiden von der Verschlussstrebe (22) und der Kausche (30) schwarz ist.

10. Karabiner, umfassend einen Körper (10) und einen Verschluss (20) nach einem vorhergehenden Anspruch, der schwenkbar mit dem Körper verbunden ist.

11. Karabiner nach Anspruch 10, wobei die Widerlager zwischen den Schraubengewinden und der Verbindung mit dem Körper angeordnet sind.

## Revendications

1. Doigt d'un mousqueton comprenant une barre de doigt (22) et une virole de verrouillage (30), la barre de doigt (22) et la virole de verrouillage (30) étant interconnectées par des filets d'interconnexion (40), de sorte que sous l'effet de leur rotation mutuelle autour d'un axe, la virole (30) se déplace axialement le long de la barre de doigt entre une position ouverte et une position fermée,
**caractérisé en ce que** chacune de la barre de doigt (22) et de la virole de verrouillage (30) est dotée de butées (42, 44) s'étendant circonférentiellement autour d'un axe, lesdites butées (42, 44) entrant en contact entre elles lorsque la virole (30) se trouve dans la position fermée.

2. Doigt selon la revendication 1, chaque butée (42, 44) étant disposée dans un plan perpendiculaire à l'axe.

3. Doigt selon la revendication 1 ou la revendication 2, une des butées (42, 44), ou les deux, s'étendant dans une boucle continue autour de l'axe.

4. Doigt selon une quelconque des revendications précédentes, la butée (44) de la virole (30) faisant saillie radialement vers l'intérieur dans un passage axial s'étendant à travers la virole.

5. Doigt selon une quelconque des revendications précédentes, la butée (42) de la barre de doigt (22) étant une nervure faisant saillie radialement d'une surface extérieure de la barre de doigt.

6. Doigt selon une quelconque des revendications précédentes, dans laquelle une de la barre de doigt (22) et de la virole (30), ou les deux, étant anodisée(s).

7. Doigt selon la revendication 6, l'anodisation étant une couche dont l'épaisseur est comprise dans la plage 8-20µm.

8. Doigt selon la revendication 6, l'anodisation étant une couche dont l'épaisseur est supérieure à 15 µm.

9. Doigt selon une quelconque des revendications 6 à 8, la couleur de l'anodisation d'une de la barre de doigt (22) et de la virole (30), ou des deux, étant noire.

10. Mousqueton comprenant un corps (10) et un doigt (20) selon une quelconque des revendications précédentes connecté au corps.

11. Mousqueton selon la revendication 10, dans lequel les butées sont disposées entre les filets et le raccordement au corps.
